# EUROPEAN PATENT APPLICATION

(11) **EP 4 282 611 A1**
(43) Date of publication of application: **29.11.2023**
(21) Application number: 22175052.4
(22) Date of filing: 24.05.2022
(51) Int. Cl.: B29B 17/02, B29K 23/00, B29K 27/06, B29K 67/00, B29K 69/00, B29K 77/00

(54) **HYDROTHERMAL UPGRADING AND SEPARATION OF MIXED PLASTICS**

(71) Applicant: Nederlandse Organisatie voor toegepast-natuurwetenschappelijk Onderzoek TNO, 2595 DA 's-Gravenhage (NL)
(72) Inventor: PELS, Jan Remmert, 2595 DA's-Gravenhage (NL); ABELHA, Pedro, 2595 DA's-Gravenhage (NL)
(74) Representative: V.O.

(57) **Abstract**

Method to separate at least a light fraction comprising low-density plastics having a density lower than water from plastic waste using superheating in water. The method is further based on efficient phase separation and at least partial melting of the low-density plastics.

## Description

The invention is in the field of processing and recycling plastic waste. In particular, the invention is directed to a method to retrieve at least a light fraction comprising low-density plastics from plastic waste.

It is widely acknowledged that plastic waste has a negative impact on the environment. Methods to recycle plastics are therefore continuously sought after in attempt to achieve a circular economy (*i.e.* a system of closed loops in which renewable sources are used and used materials lose their value as little as possible).

Typically, a recycling process starts after a plastic product has been rejected during production phase and can be mechanically recycled, or after it reached its end-of-life and is considered waste. The waste is collected and sorted. Sorting typically comprises mechanical sorting first by type of material (e.g. plastics, paper), after which the separate plastics stream is sorted by type of polymer, for instance using infrared spectroscopy. This results in several mono streams and a mixed plastics waste stream. A mono stream ideally comprises substantially one type of polymer or a plurality of similar types of polymers. However mono streams typically do not reach a high enough purity or quality for the materials to be used or to be interchangeable with virgin materials.

Separating plastic waste to high-purity mono streams is thus still challenging and may be further complicated by the material shape or composition (e.g. presence of filler, additives, co-polymers, etc.). For instance, waste foils, cups and some bottles are more difficult to separate by these existing methods, leaving a stream that does not optimally allow direct mechanical or chemical recycling. This stream is therefore typically applied in low-grade applications or incinerated. In addition, recycling methods such as mechanical recycling, chemical recycling and depolymerization are often hindered by contaminations of *i.a.* dirt and organic matter still present in the streams.

There are several disclosures describing methods to separate polymers from plastic waste mixtures for higher-grade recycling.

A first example is provided in WO02/074845. Herein, a method for treating mixed plastic-containing waste is described. The method includes mixing the plastic waste and water to obtain a slurry. This slurry is kept at an increased temperature with an autogenous pressure to melt at least 80 wt% of the plastics. After cooling, the molten plastics solidify, and form purified mixed plastic particles. However, the separation between plastics is not optimal and it delivers still a large low-grade plastic stream, which the method associates with lower value energy applications (*e*.*g*. to be used as ore reducing agents in blast furnaces or used as secondary fuels in a furnace).

Flotation techniques may also be used, as described in *e.g.* US4132633. Herein, gas bubbles are introduced that selectively adhere to polypropylene and/or polyethylene, to allow for these plastics to float. Another example is described in US5248041. However, flotation techniques are often not good enough for odd-shaped plastic pieces, as contaminates are easily trapped.

Another method is described in US9469049. Herein, a method is described to separate materials from mixed plastic waste. Impurities are separated and the plastic waste is separated in several streams using multiple separation steps. At least one of the separation steps comprises a sink-or-float separation. Disadvantageously, this method requires many processing steps.

It is an object of the present invention to provide an improved method for retrieving plastics from plastic waste that overcomes at least part of the above-mentioned drawbacks. In particular, the method according to the present invention may be used to provide individual plastic streams for further treatment to achieve higher-grade recycling. The present inventors surprisingly found that this can be achieved by mixing plastic waste and superheated water and allowing for phase separation of different layers to occur. It was found that as such, at least a light plastic fraction can be retrieved from the plastic waste.

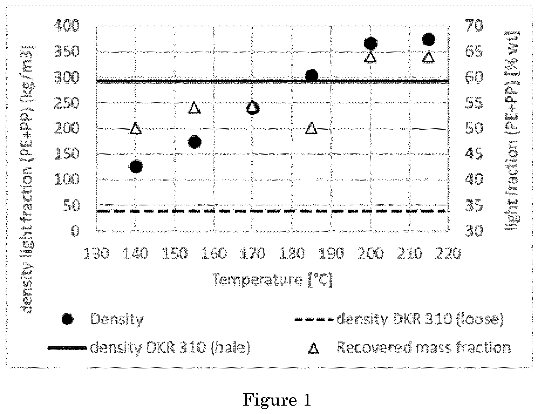

Figure 1 illustrates the experimental results of a retrieved light plastic fraction from plastic waste according to DKR310 at different temperatures.

Thus, in a first aspect the invention is directed to a method for retrieving a light plastic fraction from plastic waste. The light plastic fraction comprises low-density plastics, having a density of less than 1 g/cm³ at 20 °C. Thus having a density of less than water. The method comprises the steps of:
- providing the plastic waste and superheated water in a vessel at a temperature between 120 °C and 270 °C to obtain a superheated aqueous plastic mixture;
- agitating the superheated aqueous plastic mixture allowing for phase separation to obtain the light plastic fraction on top of an aqueous fraction, and to obtain a heavy plastic fraction below the aqueous fraction, wherein the heavy plastic fraction comprises high-density plastics, having a density higher than 1 g/cm³ at 20 °C (*i.e.* a relative density higher than 1);
- separating the light plastic fraction from the heavy plastic and aqueous fractions to obtain a retrieved light plastic fraction.

In a particular embodiment, the method comprises feeding the plastic waste to a vessel comprising water to obtain an aqueous plastic mixture and heating said mixture to a temperature between 120 °C and 270 °C to obtain the superheated aqueous plastic mixture. Providing heat to the water may be done before, during and/or after feeding the plastic waste and during agitating the aqueous mixture. Preferably, the water is heated before feeding the plastic waste as this requires less energy. It may be appreciated however, that during the agitation, the temperature of the aqueous plastic mixture must remain sufficiently high for the water to remain superheated.

The method comprises agitating the aqueous plastic mixture allowing for phase separation to occur in order to obtain the light plastic fraction on top of an aqueous fraction and a heavy plastic fraction below the aqueous fraction. The fractions separate based on their relative densities as the light plastic fraction comprises low-density plastics that have a density lower than 1 g/cm³ at 20 °C (*i.e.* lower than the density of water) and the heavy plastic fraction comprises high-density plastics that have a density higher than 1 g/cm³ at 20 °C (*i.e.* higher than the density of water). It may be appreciated that the light plastics fraction as a whole also has a density lower than 1 g/cm³ at 20 °C due to the large content of low-density plastics in this fraction. Similarly, it may be appreciated that the heavy plastics fraction as a whole has a density higher than 1 g/cm³ at 20 °C. After the phase separation has occurred, the light plastic fraction is separated from the heavy plastic and aqueous fractions to obtain a retrieved light plastic fraction.

The plastic waste to be hydrothermally upgraded is typically a mechanically separated stream originating from an industrial and/or domestic raw plastic waste main stream. For example, typical plastic waste that can be used for the method of the present invention is plastic waste according to the DKR-310 and/or the DKR-350 standard. The DKR standard is established by the German "Deutsche Gesellschaft fur Kreislaufwirtschaft und Rohstoffe mbH (DKR)".

Plastic waste according to the DKR-310 standard comprises foils consisting of at least 92 wt% of one specific polymer type. According to the standard, the foils should have a surface area larger than DIN A4, like plastic bags and wrapping foils. Plastic waste according to the DKR-350 standard comprises packaging materials with at least 90 wt% typical packaging plastics.

Although large pieces of plastic waste can be fed to the vessel, according to the present invention, it is preferred that the plastic waste comprises, preferably essentially consists of pieces of which the largest dimension is at most 150 mm, preferably at most 100 mm, more preferably at most 50 mm, most preferably at most 20 mm. Accordingly, DKR-310, DKR-350 or other type of plastic waste streams containing large pieces is preferably first subjected to a pre-treatment step, such as shredding or milling. It was found that when the average size of the plastic waste decreases, the purity of the light plastic fraction increases. Accordingly, it is preferred that the plastic waste has an average size of at most 150 mm, preferably at most 100 mm, more preferably at most 50 mm, preferably at most 20 mm, considering the largest dimension of the plastic waste pieces.

It is further preferred that the plastic waste comprises polyolefins, as these typically have a density lower than 1 g/cm³ at 20 °C. In particular, it is preferred that the plastic waste comprises at least 50 wt%, preferably at least 60 wt%, more preferably at least 65 wt%, most preferably at least 70 wt% polyolefins based on the total weight of the plastic waste.

The most common examples of polyolefins are polyethylene (PE) and polypropylene (PP). It is accordingly preferred that the light plastics comprise polyolefins, preferably polypropylene (PP) and/or polyethylene (PE). In fact, the light plastic preferably comprise at least 50 wt%, preferably at least 60 wt%, more preferably at least 65 wt%, most preferably at least 70 wt% PP and/or PE based on the total weight of the plastic waste.

Heavy plastics that are typically present in the plastic waste are polyethylene terephthalate (PET), polycarbonate (PC), polyamides (PA) and/or polyvinyl chloride (PVC). These polymers have a density higher than 1 g/cm³ at 20 °C. Accordingly, the heavy plastics of the present invention preferably comprises these polymers individually or in any combination thereof.

The type of vessel that can be used for the present invention is not particularly limiting, any vessel that can accommodate the conditions of the method according to the present invention may suffice.

In the present invention, the water is superheated to a temperature between 120 °C and 270 °C. Superheating is a term used to indicate that a liquid, here water, is heated to a temperature higher than its boiling point under atmospheric pressure. Boiling of the liquid at the superheated pressure is prevented with an increased pressure. The pressure may in the method according to the present invention be autogenous.

By providing heat and agitating the superheated aqueous plastic mixture, at least part of the low-density plastics may melt to obtain at least partially molten plastics. Upon melting of the low-density plastics, the low-density plastics tend to contract into granular-like or sphere-like shaped particles. This shape is, without wishing to be bound by theory, believed to be caused by a combination of agitating the aqueous plastic mixture forcing partial immersion in the water (surface tension forces) and by shape memory of the plastic material. Shape memory refers to the tendency of the plastics to at least partially return the original shape of the plastic material. Additionally, the agitation may provide shear forces on the plastics that contribute to the formation of smaller sized granular-like or sphere-like materials. The at least partially molten low-density plastics therefore preferably comprises a granular-like material. The present method may further comprise cooling the molten plastics to solidify these such that the light plastic fraction comprises a granular-like material comprising the low-density plastics.

The average particle size of the granular-like material is typically up to 10 mm, preferably up to 5 mm.

Advantageously, the granular-like material has a relatively bulk dense packing, which allows for efficient transportation. Additionally, reuse is typically simplified as the shape of the material approximates the shape properties of granulated virgin materials. Further, the shape allows for a higher purity because less contaminants may be trapped by the low-density plastics. Another advantage includes the ease of drying the granular-like material.

The present inventors found that the temperature to which the superheated aqueous plastic mixture is heated may be of influence to the outcome of the method. If the water is superheated to a relatively high temperature, more low-density plastics melt, typically resulting in a higher purification and better separation. The viscosity of the aqueous plastic mixture may accordingly be lowered with increasing temperature, where additionally, a higher temperature typically results in smaller granular-like or sphere-like materials of the molten low-density plastics. While the term viscosity is typically used to describe a property of a fluid or a continuous mixture of fluid and solids, it may be appreciated that herein the viscosity relates to the aqueous plastic mixture as a whole. A lower viscosity thus typically allows for a less dense mixture. However, the temperature preferably does not exceed 270 °C as plastics may degrade at such high temperatures. Further, compounds may be formed that transfer into the aqueous fraction which compounds can be detrimental for further processing thereof such as digestion (*vide infra*). Generally, the temperature to which the superheated aqueous plastic mixture is heated is between 180 °C and 240 °C, preferably between 190 °C and 230 °C, most preferably between 200 °C and 220 °C. This temperature range can provide the optimal balance between viscosity, quantity of recovered low-density and/or high-density polymers from the plastic waste, purity of the fractions, size of the molten low-density plastics, energy consumption, degradation of the plastics and formation of toxic compounds.

Agitation may be achieved by any means known to the skilled person. Examples include stirring with any type of mechanical stirrer, or by using jets. The latter may be preferred, as this minimizes entanglement of the plastics in the agitation means. The agitation is believed to also allow for organic and/or inorganic dirt that has stuck to the low and/or high-density plastics to be physically separated from the plastics. It is generally found that increasing the intensity of the agitation allows for cleaner and smaller granular-like or sphere-like materials to be formed. Without wishing to be bound by theory, is believed that the sizes decrease with increasing stirring intensity due to the shearing forces that are applied to the plastics. Depending on the desired size of the granules, the agitation intensity may thus be altered. It is, however, noted that care should be taken that the agitation is not too intense such that phase separation of the fraction no longer occurs, or too minimal for efficient cleaning and separation of the fractions.

Typically, phase separation occurs after a period of at least 5 minutes, such as roughly 30 minutes, of agitation and superheating. However, the optimal residence time is dependent on *i.a.* the composition of the plastic waste, temperature and agitation intensity.

As mentioned above, at least three fractions are formed, *i.e.* the light plastic fraction, the aqueous fraction and the heavy plastic fraction. Besides relative densities, the fractions can also be distinguished on their relative plastics content. The light plastic fraction is most enriched in low-density plastics compared to the other two fractions, while the heavy plastic fraction is most enriched in high-density plastics compared to the other two fractions. The aqueous fraction is poorer in low-density plastics compared to the light plastic fraction and is poorer in high-density plastics compared to the heavy plastic fraction. The light plastic fraction comprises the low-density plastics which are at least partially melted or shrank as a result of the superheated water. This fraction forms as the top layer, due to the relative densities of the fractions. The light plastic fraction can be easily retrieved after phase separation by any suitable technique known to the skilled person. Such techniques might include *e*.*g*. hydrocyclones, filtration and/or sieving. The light plastic fraction may be retrieved while the at least partially molten low-density plastics are still in their molten state, or the fraction may be retrieved when the at least partially molten low-density plastics are solidified, *e*.*g*. by cooling. It may be appreciated that it is also possible that some partially molten low-density plastics are still in their molten state, while others are solidified. It was found that the purity of the retrieved light plastic fraction is at least 95 wt%, typically even at least 99 wt% of low-density plastics, *e.g.* PE and/or PP, based on the total dry weight of the light plastic fraction. The dry weight refers to the total weight of the fraction after retrieving and drying the fraction. Typically, after separation and allowing dripping of some of the aqueous fraction (mainly water), the moisture content is between 30-40%wt, based on the total weight of the light plastic fraction. This may further be subjected to thermal drying, in which case, the moisture content is typically below 1%wt. It may thus be appreciated that some water is left after drying, but this is typically negligible. Advantageously, the present method can result in that the light plastic fraction contains significantly reduced amounts of heteroatoms e.g. oxygen, chlorine, nitrogen and/or sulfur. The separated light plastic fraction may thus be suitably subjected to further processing such as dissolution/solvolysis for mechanical recycling, pyrolysis and/or naphtha cracking. In particularly preferred embodiments, the retrieved light plastic fraction comprises less than 0.100 wt%, preferably less than 0.01 wt% chloride and/or less than 0.100 wt% sulfur, and/or less than 0.100 wt% nitrogen, based on the total dry weight of said retrieved light plastic fraction.

The aqueous fraction forms as a middle layer. The aqueous fraction typically comprises biogenic materials. Biogenic materials generally comprise organic material produced by the physiologic activities of organisms such as plants and/or animals. Part of the biogenic materials can be dissolved, but it may also be suspended in the aqueous fraction (*e*.*g*. cellulose). The biogenic materials may, for instance, include wood, waste food and/or cellulose fibers from paper and cardboard. The cellulose fibers may be suspended. Further, the aqueous fraction may comprise watersoluble constituents such as salts and/or sugars. The aqueous fraction may comprise chloride (*e*.*g*. hydrogen chloride or chloride salts). In fact, advantageously, the present method may also be suitable for dechlorination of chlorine-containing plastics (*i.a.* PVC). It may further be appreciated that in case some biodegradable polymers are present in the plastic mixture that they typically depolymerize into monomers under the conditions of the present invention and dissolve in the aqueous fraction. The monomers may be retrieved to allow for further processing.

The aqueous fraction can be retrieved by any suitable means, for instance by using hydrocyclones, filtering and sieving, or a combination thereof. Accordingly, the method may further comprise retrieving the aqueous fraction from the aqueous plastic mixture. After retrieval, the aqueous fraction can be subjected to further treatment such as digestion, as is known to follow for example the TORWASH^{®} method as described in *i.a.* WO2013/162355, which is incorporated herein in its entirety.

The heavy plastic fraction comprises the high-density plastics. These plastics typically have higher melting points than the low-density plastics. However, it may be appreciated that some of the high-density plastics may melt at the conditions of the present methods. Similarly, upon melting the high-density plastics may form granular-like material. This shape is advantageous as it typically does not allow for much air or other light materials to be trapped. The limited to absent inclusion of air or other light materials allows for the high-density plastics to indeed sink instead of undesirably floating due to an artificially low-density. Further, other contaminants can be present in the original plastic waste which are insoluble in the aqueous fraction. Such contaminants can include inorganic materials such as sand, metal, glass, additives and/or pigments. As the density thereof is typically above 1 g/cm³, these contaminants often sink below the aqueous fraction and are typically part of the heavy plastic fraction. Accordingly, the heavy plastic fraction may further comprise an non-plastic insoluble fraction comprising sand, metal, glass, additives and/or pigments. The heavy plastic fraction may also be retrieved by any suitable means, such as screws. Accordingly, the method may further comprise retrieving the heavy plastics fraction from the aqueous plastic mixture. Additionally, the method may also comprise separation of the high-density plastics from the non-plastic insoluble fraction. Separation of the high-density plastics from sand, metal, glass may be achieved by separation based on density/size differences. Separation from the metal can be done by e.g. magnetic, or eddy current separation.

There is no particular order for retrieving the fractions. However, it may be appreciated that the aqueous fraction cannot be retrieved first, as retrieving the light plastic fraction is then unnecessarily complicated. Typically, the high value products are contained in the light plastic fraction. Therefore, often this fraction is retrieved first, leaving a two-layer system of the aqueous fraction on top of the heavy plastic fraction. These fractions can then be each be retrieved. It may be appreciated that a minor amount of the aqueous fraction can be separated with the light plastic fraction. However, the majority, such as essentially all, of the aqueous fraction is typically left after separating the light plastic fraction, such as left on top of the heavy plastic fraction.

The ease of the retrieval is at least partially determined by the cleanliness of the phase separation of the fractions. The phase separation is in turn at least partially determined by the agitation intensity (*vide supra*). Besides the agitation intensity, the liquid to solid (L/S) ratio also determines the ease of phase separation and retrieval. The liquid to solid ratio herein refers to the weight ratio of the water to the plastic waste. More liquid provides more space for the fractions to physically separate. For instance, more liquid allows for the top light plastics fraction to be located further away from the bottom heavy plastics fraction (*i.e.* the aqueous fraction has more volume). Further, more liquid results in a less viscous aqueous plastic mixture, thus allowing for more relative movement of the plastics to each other. Additionally, the higher the L/S ratio, the more impurities can be contained in the aqueous fraction. The optimal L/S ratio therefore depends on the composition of the plastic waste. In general, if more biogenic material is present, a larger L/S ratio in the vessel is preferred. Typically, the L/S ratio is at least 10:1, preferably at least 15:1, more preferably at least 20:1, most preferably the ratio is between 20:1 and 40:1.

In an embodiment of the present invention, the aqueous plastic mixture may contain agents such as surfactants and/or pH correctors or regulators (*e*.*g*. buffering agents) to help removing ink, or other additives from the polymeric materials. These agents can be added in any step of the process before and during superheating, *e*.*g*. to the water before or after mixing the water with the plastic material or to the plastic waste before this mixing. Suitable surfactants may be cationic, anionic, nonionic or zwitterionic. Preferably, the surfactant is a low-foaming or non-foaming surfactant. Nonionic surfactants are accordingly preferred. Moreover, it is preferred that the agent such as the surfactant is biodegradable, such that is can be digested when the aqueous fraction is subjected to digestion.

The method may be performed batch wise, but a continuous method is preferred. The vessel for the method can appropriately be chosen.

For the purpose of clarity and a concise description, features are described herein as part of the same or separate embodiments, however, it will be appreciated that the scope of the invention may include embodiments having combinations of all or some of the features described.

The present invention can be illustrated by the following nonlimiting examples.

### Example 1 - DKR310 plastic waste treated at different temperatures

Vessels were provided with water and plastic waste according to DKR310 at an L/S ratio of 20. The experiments were carried out with a stirring rate of 600 rpm and a residence time of 30 min. The water was superheated to temperatures ranging from 200-240°C. The respective compositions of the DKR310 waste is provided in Table 1. The plastic waste was shredded prior to providing it to the vessel to obtain a size of maximum 20 mm.

**Table 1**

| *Values are presented on a dry-basis* | |
|---|---|
| Parameter \ material | DKR310 |
| Ash [%wt] | 15.3 |
| C [%wt] | 62.9 |
| H [%wt] | 9.9 |
| N [%wt] | 0.90 |
| S [%wt] | 0.23 |
| O [%wt] | 12.7 |
| Cl [%wt] | 0.31 |
| Higher heating value (HHV) [MJ/kg] | 31.1 |
| Non packed bulk density [kg/m3] | 49 |

The polyolefin content of the provided waste was estimated to be 70 wt%, based on the total weight of the plastic waste.

The light fraction was recovered, dried and analyzed. The experimental conditions and results are presented in Table 2. The results are also illustrated in Figure 1, as well as for a wider range of temperature conditions. The experiments were performed with a smaller scale multiclave system (6x) with 100 ml of individual internal capacity.

**Table 2**

| * *weight ratio;* ** *fraction from the dry mass input of plastic waste* | | | |
|---|---|---|---|
| Parameter \ test # | 1 | 2 | 4 |
| Input material | DKR310 | DKR310 | DKR310 |
| Set-point [°C] | 200 | 220 | 240 |
| L/S [water/solids]* | 20 | 20 | 20 |
| Stirring [rpm] | 600 | 600 | 600 |
| Residence time [min] | 30 | 30 | 30 |
| Input size [mm] | < 20 | <20 | <20 |
| | | | |
| Polyolefins recovered [%wt] (light fraction)** | 57.2 | 56.3 | 51.2 |
| Non packed bulk density [kg/m3] | 226 | 323 | 348 |
| C [%wt] | 80.9 | 80.3 | 82.2 |
| H [%wt] | 13.3 | 13.2 | 13.3 |
| N [%wt] | 0.135 | 0.243 | 0.055 |
| S [%wt] | 0.039 | 0.056 | 0.036 |
| O [%wt] | 3.8 | 2.3 | 2.2 |
| Cl [%wt] | 0.028 | 0.019 | 0.012 |
| Ash [%wt] | 4.4 | 4.0 | 3.5 |
| HHV [MJ/kg] | 43.0 | 43.4 | 44.1 |

Temperature increase was found to have a beneficial effect on the bulk density and in the quantity of the separated light plastic fraction, mainly comprising polyolefins. The temperature increase was also found to have a beneficial effect in increasing the C content, while decreasing the heteroatoms levels. The chemical composition of the light fraction is similar to the chemical composition of commercial polyolefins (including the fillers and additives used in the production process of the plastics).

### Example 2 - DKR310 waste at different input size

Vessels were provided with water and plastic waste according to DKR310 at an L/S ratio of 20. The experiments were carried out with a stirring rate of 600 rpm and a residence time of 30 min at a temperature of 220 °C. The respective compositions of the DKR310 waste is identical to Example 1 and provided in Table 1. The plastic waste was shredded for one experiment to obtain a size of maximum 20 mm and for one experiment to a maximum of 100 mm.

The polyolefin content of the provided waste was estimated to be 70 wt%, based on the total weight of the plastic waste.

The light fraction was recovered, dried and analyzed. The experimental conditions and results are presented in Table 3. The input particle size increase had a slight influence on the bulk density of the recovered polyolefins, which decreased. The differences on the N and S contents can be attributed to the heterogeneous nature of the input waste. The detection of N in the polyolefins recovered can be attributed to the presence of some polyamides, which proven to be present in concentrations below 1%wt.

**Table 3**

| * *weight ratio;* ** *fraction from the dry mass input of plastic waste* | | |
|---|---|---|
| Parameter \ test # | 2 | 3 |
| Input material | DKR310 | DKR310 |
| Set-point [°C] | 220 | 220 |
| L/S [water/solids]* | 20 | 20 |
| Stirring [rpm] | 600 | 600 |
| Residence time [min] | 30 | 30 |
| Input size [mm] | <20 | <100 |
| | | |
| Polyolefins recovered [%wt] (light fraction)** | 56.3 | 56.9 |
| Non packed bulk density [kg/m3] | 323 | 278 |
| C [%wt] | 80.3 | 80.9 |
| H [%wt] | 13.2 | 13.3 |
| N [%wt] | 0.243 | 0.100 |
| S [%wt] | 0.056 | 0.033 |
| O [%wt] | 2.3 | 2.4 |
| Cl [%wt] | 0.019 | 0.021 |
| Ash [%wt] | 4.0 | 4.3 |
| HHV [MJ/kg] | 43.4 | 43.6 |

### Example 3 - DKR310 vs. DKR350 plastic waste

Vessels were provided with water and plastic waste according to DKR310 and DKR350. The L/S ratio was set at 20, with a stirring rate of 600 rpm, a temperature of 220 °C and a residence time of 30 min. The respective compositions of the DKR310 and DKR350 waste is provided in Table 4. The plastic waste was shredded to a maximum of 100 mm.

The polyolefin content of the provided waste was estimated to be 70 wt%, based on the total weight of the plastic waste.

**Table 4**

| *Values are presented on a dry-basis* | | |
|---|---|---|
| Parameter \ material | DKR310 | DKR350 |
| Ash [%wt] | 15.3 | 19.8 |
| C [%wt] | 62.9 | 57.9 |
| H [%wt] | 9.9 | 8.3 |
| N [%wt] | 0.90 | 0.64 |
| S [%wt] | 0.23 | 0.12 |
| O [%wt] | 12.7 | 14.9 |
| Cl [%wt] | 0.31 | 0.29 |
| HHV [MJ/kg] | 31.1 | 28.0 |
| Non packed bulk density [kg/m3] | 49 | 58 |

The light fraction was recovered, dried and analyzed. The experimental conditions and results are presented in Table 5. The method proved to be robust and efficient to separate the polyolefins, by using different sources of plastic waste (DKR310 and DKR350).

**Table 5**

| * *weight ratio;* ** *fraction from the dry mass input of plastic waste* | | |
|---|---|---|
| Parameter \ test # | 3 | 6 |
| Input material | DKR310 | DKR350 |
| Set-point [°C] | 220 | 220 |
| L/S [water/solids]* | 20 | 20 |
| Stirring [rpm] | 600 | 600 |
| Residence time [min] | 30 | 30 |
| Input size [mm] | <100 | < 100 |
| | | |
| Polyolefins recovered [%wt] (light fraction)** | 56.9 | 50.2 |
| Non packed bulk density [kg/m3] | 278 | 418 |
| C [%wt] | 80.9 | 82.4 |
| H [%wt] | 13.3 | 12.2 |
| N [%wt] | 0.100 | 0.075 |
| S [%wt] | 0.033 | 0.008 |
| O [%wt] | 2.4 | 2.8 |
| Cl [%wt] | 0.021 | 0.010 |
| Ash [%wt] | 4.3 | 3.2 |
| HHV [MJ/kg] | 43.6 | 43.6 |

### Example 4 - Aqueous fraction digestion

The aqueous fractions of tests 1, 2, 4 and 6 were obtained and subjected to digestion. The results are provided in Table 6.

**Table 6**

| L/S = 20 | Test | CODtot | biogas | CH4 | CH4/CODt ot | 1-CODfinal/CODtot |
|---|---|---|---|---|---|---|
| | | (mg/l) | (nm3/ton) | (% vol) | eff. (%wt) | eff. (%wt) |
| **DKR-310 <20mm** | | | | | | |
| 200C/600rpm | 1 | 5335 | 1.6 | 59.0 | 51.2 | 59.5 |
| 220C/600rpm | 2 | 6011 | 1.7 | 60.8 | 49.5 | 55.9 |
| 240C/600rpm | 4 | 6931 | 1.7 | 64.1 | 45.9 | 53.9 |
| **DKR-350 <100mm** | | | | | | |
| 220C/600rpm | 6 | 11268 | 3.7 | 54.8 | 51.7 | 58.1 |

## Claims

1. Method for retrieving a light plastic fraction from plastic waste, wherein the light plastic fraction comprises low-density plastics and has a density lower than 1 g/cm³ at 20 °C, wherein said method comprises:
- providing the plastic waste and superheated water in a vessel at a temperature between 120 °C and 270 °C to obtain a superheated aqueous plastic mixture;
- agitating the superheated aqueous plastic mixture allowing for phase separation to occur in order to obtain the light plastic fraction on top of an aqueous fraction, and to obtain a heavy plastic fraction below the aqueous fraction, wherein the heavy plastic fraction comprises high-density plastics and has a density higher than 1 g/cm³ at 20 °C;
- separating the light plastic fraction from the heavy plastic and aqueous fractions to obtain a retrieved light plastic fraction.

2. Method according to the previous claim, wherein the low-density plastics comprise polyolefins, preferably polypropylene (PP) and/or polyethylene (PE).

3. Method according to any of the previous claims, wherein the high-density plastics comprise polyethylene terephthalate (PET), polycarbonate (PC), polyamides (PA) and/or polyvinyl chloride (PVC).

4. Method according to any of the previous claims, further comprising separating the heavy plastic fraction from the aqueous fraction.

5. Method according to any of the previous claims, wherein the aqueous fraction comprises biogenic materials, preferably biogenic organics and/or suspended cellulose fibers.

6. Method according to any of the previous claims, wherein the retrieved light plastic fraction comprises less than 0.100 wt%, preferably less than 0.01 wt% chloride and/or less than 0.100 wt% sulfur, and/or less than 0.100 wt% nitrogen, based on the total dry weight of said retrieved light plastic fraction.

7. Method according to any of the previous claims, wherein the retrieved light plastic fraction comprises PE and/or PP in an amount of more than 95 wt%, preferably more than 99 wt% based on the total dry weight of the retrieved light plastic fraction.

8. Method according to any of the previous claims, said method comprising melting at least part of the low-density plastics by contacting the plastic waste and superheated water and/or by agitating the superheated aqueous plastic mixture to obtain at least partially molten plastics, followed by cooling said molten plastics such that the retrieved light plastic fraction comprises a granular-like material comprising the low-density plastics.

9. Method according to any of the previous claims, wherein the heavy plastic fraction further comprises inorganic materials, preferably sand, metal, additives, pigments and/or glass; and wherein the method preferably further comprises separating the heavy plastic fraction from the inorganic materials such as sand, metal, additives, pigments and/or glass.

10. Method according to any of the previous claims wherein the plastic waste comprises at least 50 wt%, preferably at least 60 wt%, more preferably at least 65 wt%, most preferably at least 70 wt% polyolefins based on the total weight of the plastic waste.

11. Method according to any of the previous claims, wherein the plastic waste is according to DKR-310 and/or according to DKR-350 standards.

12. Method according to any of the previous claims, wherein the weight ratio of the water to the plastic waste in the vessel (L/S ratio) is at least 10:1, preferably at least 15:1, more preferably at least 20:1, most preferably the ratio is between 20:1 and 40:1.

13. Method according to any of the previous claims, wherein the plastic waste comprises pieces of which the largest dimension is at most 150 mm, preferably at most 100 mm, more preferably at most 50 mm, most preferably at most 20 mm.

14. Method according to any of the previous claims, wherein the plastic waste and superheated water is provided and/or is agitated in the vessel at a temperature between 180 °C and 240 °C, preferably between 190 °C and 230 °C, most preferably between 200 °C and 220 °C.

15. Method according to any of the previous claims, wherein the method is continuous.
